# EUROPEAN PATENT APPLICATION

(11) **EP 1 739 109 A1**
(43) Date of publication of application: **03.01.2007**
(21) Application number: 06013503.5
(22) Date of filing: 29.06.2006
(51) Int. Cl.: C08F 230/04, C08L 43/02

(54) **Flame retardant polymer emulsion**

(30) Priority: 01.07.2005 GB 0513487
(71) Applicant: Zakikhani, Mohsen, Harborne Birmingham B17 8RD (GB)
(72) Inventor: Zakikhani, Mohsen, Harborne Birmingham B17 8RD (GB)
(74) Representative: Harrison Goddard Foote

(57) **Abstract**

The invention provides a flame retardant material which comprises a flame retardant polymer emulsion obtained by the polymerisation of at least one unsaturated monomer comprising at least one phosphorus atom. Preferably, said monomer is copolymerised with at least one co-monomer. The flame retardant material may be used for the preparation of flame retardant formulations which find particular application in the preparation of intumescent coatings, back coating layers for fabrics, flame retardant finishes for wood, textile fibres and polymer castings. The flame retardant materials of the invention show significant advantages over the materials of the prior art in terms of ease and cost of preparation and with regard to health, safety and environmental considerations.

## Description

### Field of the Invention

The present invention relates to flame retardant materials which find particular application in intumescent coatings, as back coatings for fabrics and flame retardant finishes for wood, and in the production of flame retardant fibres and polymer castings. More specifically, the invention is concerned with flame retardant polymer emulsions, and methods for their preparation.

### Background to the Invention

The increasingly demanding health and safety requirements which are now embodied in legislation across many countries of the world have necessitated a more proactive approach to issues such as product flammability, with the consequence that stringent criteria are now applied to most retail products. Thus, manufacturers are now required to work within strict product guidelines for a wide range of materials, with particular emphasis having been placed on the development of flame retardant paints, together with non-flammable fabrics and fibres for use in applications such as clothing, furniture and soft furnishings.

However, many of the approaches which have been adopted in the search for non-flammability have resulted in the use of materials which have themselves been associated with various drawbacks, typically in terms of cost, both of the materials themselves, and the additional labour costs relating to their procurement and use; additionally, however, health and safety considerations are pertinent to certain prior art materials, the use of which is disadvantageous due to their level of toxicity and deleterious effects on the environment. Thus, for example, the use of various halogenated materials as additives for reducing or eliminating flammability has obvious drawbacks in environmental terms.

Hence, whilst the problem of product and material flammability has generally been successfully addressed across a range of different applications, a new set of problems has arisen as a consequence of several of the approaches which have been adopted. Thus, the present invention seeks to address this issue, and to provide a means by which flammability may be prevented without the attendant disadvantages which have commonly been associated with the techniques known from the prior art. In this context, the present inventor has provided a flame retardant material in the form of a polymer emulsion which finds particular use in the production of intumescent paint which may be produced and applied at much lower cost than the flame retardant materials of the prior art, and which does not suffer from the toxicity problems which have frequently been encountered with these materials. In addition, the flame retardant materials of the present invention may be conveniently applied over a range of materials in a non-labour intensive manner, leading to further reduced costs in terms of labour.

### Summary of the Invention

Thus, according to a first aspect of the present invention there is provided a flame retardant material which comprises a flame retardant polymer emulsion obtained by the polymerisation of at least one unsaturated monomer comprising at least one phosphorus atom.

Preferably, said at least one unsaturated monomer comprising at least one phosphorus atom comprises a phosphonate or phosphate monomer, more preferably a phosphate monomer. Especially preferred monomers are phosphate monomers comprising at least one (alk)acrylate group, most preferably at least one acrylate or methacrylate group.

Especially preferred monomers in the context of the present invention include (alk)acryloyoxylalkyl phosphate monomers and particularly favoured in this regard are mono- and bis[(alk)acryloyloxy(C₁₋₄ alkyl)] phosphate monomers, such as mono- and bis-[(alk)acryloyloxy(m)ethyl] phosphate monomers.

Particularly successful results have been achieved with mono- and bis-[2-((meth)acryloyl)oxyethyl] phosphate monomers and, most specifically, with 2-(methacryloyl)oxyethyl phosphate and bis[2-(methacryloyl)oxyethyl] phosphate.

In preferred embodiments of the present invention, the flame retardant material comprises a polymer emulsion obtained by the polymerisation of at least one unsaturated monomer comprising at least one phosphorus atom with at least one co-monomer.

The polymer emulsion of the present invention comprises at least 0.0001 % by weight of said at least one unsaturated monomer comprising at least one phosphorus atom. In the preferred embodiments, said polymer emulsion may be obtained by the polymerisation of said at least one unsaturated monomer comprising at least one phosphorus atom with at least one co-monomer in any ratio of from 99.9999:0.0001 to 0.0001:99.9999 by weight, with highly satisfactory results being obtainable from a wide variety of different compositions, and particularly preferred ratios being in the range from 55:45 to 94:6, most preferably from 75:25 to 87.5:12.5, by weight.

In more preferred embodiments of the invention said at least one unsaturated monomer comprising at least one phosphorus atom comprises more than one such monomer. Most preferably, the polymer emulsion of the present invention comprises two unsaturated monomers comprising at least one phosphorus atom. In said embodiments, said unsaturated monomers comprising at least one phosphorus atom may be present in any proportion relative to each other. Thus, when said polymer emulsion comprises two unsaturated monomers comprising at least one phosphorus atom, said monomers may be present in an amount of from 0.0001-99.9999% of a first monomer and 99.9999-0.0001% of a second monomer.

In the said embodiments, wherein said at least one unsaturated monomer comprising at least one phosphorus atom comprises more than one such monomer, said monomers may include the same or different levels of unsaturation. More preferably, said monomers comprise different levels of unsaturation. Thus, in a particularly preferred embodiment, wherein the polymer emulsion of the present invention comprises two unsaturated monomers comprising at least one phosphorus atom, the first of said monomers comprises a single unsaturated bond, whilst the second of said monomers comprises multiple unsaturated bonds; especially preferred are embodiments wherein the second monomer comprises two unsaturated bonds.

According to a second aspect of the present invention, there is provided a flame retardant formulation comprising a flame retardant material according to the first aspect of the invention. Said flame retardant formulation according to the second aspect of the invention finds application in a variety of situations where non-flammability is important typically, for example, in the preparation of intumescent coatings or for providing back coating layers for fabrics and carpets or flame retardant finishes for wood. In addition, said formulations may be dried and used as flame retardant additives in the direct preparation of textile fibres or polymer castings which are intrinsically non-flammable.

Thus, further aspects of the present invention envisage non-flammable intumescent coatings prepared from formulations according to the second aspect of the present invention, fabrics comprising back-coating layers prepared from formulations according to the second aspect of the present invention, flame retardant wooden materials treated with formulations according to the second aspect of the present invention, and intrinsically non-flammable textile fibres and polymer castings prepared from formulations according to the second aspect of the present invention.

Thus, whilst the present invention is described herein with particular reference to flame retardant emulsions as flame-retardants in intumescent coatings, back coatings and flame retardant finishes for wood, it is not intended to be construed as being limited thereto. For example, as previously noted, it is also within the scope of the invention to provide a flame-retardant polymeric emulsion which, when dried to a powder, may find use as a flame-retardant additive for plastics formulations. Such formulations include those intended for casting, moulding, extruding, injection or other processing.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

### Detailed Description of the Invention

The most preferred monomers in the context of the present invention are those of formula (I):

[H₂C=CRCO₂(CH₂)ₘO]ₙP(O)(OH)₃₋ₙ (I)

wherein R = H or CH₃, m = 1-4 and n = 1 or 2.

Especially preferred monomers are those of formula (II) or (III):

H₂C=C(CH₃)CO₂CH₂CH₂OP(O)(OH)₂ (II)

[H₂C=C(CH₃)CO₂CH₂CH₂O]₂P(O)OH (III)

More preferred emulsions comprise more than one of said monomers comprising at least one phosphorus atom, and the most preferred emulsions comprise two such monomers. Said monomers may comprise the same or different levels of unsaturation, but preferably comprise different levels of unsaturation. Thus, a particularly preferred flame retardant material according to the first aspect of the invention comprises a polymer emulsion obtained by the polymerisation of a monomer mixture comprising monomers (II) and (III). Said monomers may be present in any ratio from 0.0001:99.9999 to 99.9999:0.0001 relative to each other.

The at least one co-monomer preferably comprises at least one unsaturated co-monomer comprising at least one carbon-carbon double bond. Virtually any unsaturated monomer is suitable for this purpose and, in this context, mention may be made of, for example, olefinically unsaturated monomers such as [alpha],[beta]-unsaturated carboxylic acids, their anhydrides, and their aliphatic alicyclic, aromatic and heteroaromatic (partial) ester or (partial) amides, [alpha],[beta]-unsaturated nitriles, vinyl aromatics, and vinyl esters of aliphatic carboxylic acids, and vinyl ethers of aliphatic, alicyclic, aromatic, and heteroaromatic alcohols, and dienes.

Sutiable [alpha],[beta]-unsaturated carboxylic acids include itaconic, maleic, fumaric, and preferably acrylic and methacrylic acid. Suitable esters or amides include methyl (meth)acrylate, ethyl (meth)acrylate, propyl (meth)acrylate, isopropyl (meth)acrylate, butyl (meth)acrylate, sec-butyl (meth)acrylate, tert-butyl (meth)acrylate, 2-ethyl hexyl (meth)acrylate, glycidyl (meth)acrylate, hydroxyethyl (meth)acrylate, hydroxypropyl (meth)acrylate, hydroxybutyl (meth)acrylate, [beta]-carboxyethyl acrylate, monomethyl maleate, dimethyl maleate, monooctyl maleate, monomethyl itaconate, dimethyl itaconate, di(ethylene glycol) maleate, di(ethylene glycol) itaconate, 2-hydroxyethyl methyl fumarate, ethylene glycol di(meth)acrylate, hexamethylene glycol di(meth)acrylate, maleimide, 3-chloro-2-hydroxybutyl methacrylate, dimethylaminoethyl (meth)acrylate and their salts, 2-sulphoethyl (meth)acrylate and their salts, diethylaminoethyl (meth)acrylate and their salts, methoxy polyethylene glycol mono(meth)acrylate, tert-butylaminoethyl (meth)acrylate and their salts, benzyl (meth)acrylate, isobornyl (meth)acrylate, isodecyl (meth)acrylate, cyclohexyl (meth)acrylate, lauryl (meth)acrylate, methoxyethyl (meth)acrylate, hexyl (meth)acrylate, stearyl (meth)acrylate, allyl (meth)acrylate, ethoxylated nonylphenol (meth)acrylate, tridecyl (meth)acrylate, caprolactone (meth)acrylate, propoxylated allyl (meth)acrylate, tetrahydrofurfuryl (meth)acrylate, (meth)acrylamide, 2-acrylamido-2methylpropanesulfonic acid, N-isopropyl(meth)acrylamide, tert-butyl(meth)acrylamide, N,N'-methylene-bis-(meth)acrylamide, N,N-dimethyl(meth)acrylamide, and N-methylol(meth)acrylamide.

Suitable vinylaromatic monomers include styrene, (o-methylstyrene, p-methylstyrene, p-methoxystyrene, vinlytoluene, vinyl pyridine, and vinyl napthalene. Suitable unsaturated nitriles include acrylonitrile and methacrylonitrile. Suitable diene monomers that may be used include C₄ to C₉ dienes such as, for example, butadiene monomers such as 1,3-butadiene, 2-methyl-1,3-butadiene, and the like.

Most preferably, said at least one co-monomer comprises at least one [alpha],[beta]-unsaturated carboxylic acid, anhydride, or aliphatic alicyclic, aromatic or heteroaromatic (partial) ester or (partial) amide thereof, particularly preferred examples including (meth)acrylic acid and alkyl (meth)acrylates.

The flame retardant polymer emulsions according to the first aspect of the present invention may be prepared according to any of the standard preparative methods well known to those skilled in the art. Thus, any of the emulsion polymerisation techniques of the prior art are suitable for the preparation of the said emulsions and, therefore, the emulsions are obtained conveniently, reliably and economically, with no requirement for the use of special equipment.

Typically, the polymerisation reaction is carried out in an aqueous solution incorporating a surfactant or emulsifier, such as an anionic emulsifier, and polymerisation is promoted by the addition of any of a wide range of photoinitiators. Particularly satisfactory results may be achieved, for example, in the presence of persulphate initiators, such as ammonium persulphate.

The formulations according to the second aspect of the invention typically comprise the flame retardant materials according to the first aspect of the invention in combination with suitable additives. Examples of such additives include a variety of polymeric compositions including, for example, various acrylate and vinyl polymers and copolymers, such as polymers and copolymers of vinyl esters, typical examples of which include copolymers of vinyl acetate with alkenyl monomers such as alkenes and alkenyl halides, for example ethylene and vinyl chloride.

The formulations according to the second aspect of the invention are readily prepared by simple mixing together of the various components in the correct proportions. Thus, a typical formulation for back coating of fabrics could be obtained by mixing together (1) a flame retardant material comprising a copolymer of phosphorus containing monomers (II) and (III) with methacrylic acid, methyl methacrylate and butyl acrylate and (2) a copolymer of vinyl acetate, vinyl chloride and ethylene. The resulting formulation could then be used for the preparation of films which could be subsequently be applied to fabrics by means of back coating techniques. Testing of films produced in this manner by exposure to naked flames has shown the films to be completely inflammable.

The present invention will now be illustrated, though without in any way limiting the scope of the invention, by reference to the following examples.

### Examples

### Example 1

A 2 litre jacketed reactor equipped with stirrer, thermometer, condenser and addition ports was charged with 580 ml of demineralised water and 22.2 g of an anionic emulsifier (disodium alkyl sulphosuccinate, Aerosol^{®} 501, A 501). This was heated to 80°C and purged with nitrogen for half an hour, while stirring at 322 RPM.

Two initiator solutions of (a) 4.4% and (b) 1.02% ammonium persulphate in demineralised water were prepared. Separately, homogenous monomer mixture (c) containing 100 g of 2-(methacryloyloxy)ethyl phosphate, 100 g of bis[2-(methacryloyloxy) ethyl] phosphate, 90 g of methyl methacrylate, 70 g of bulyl acrylate and 5 g of methacrylic acid was also prepared.

15 ml of monomer feed (c) was added to the reactor as a single charge and stirred for 5 minutes, followed by a single charge of 3.4 ml of the 4.4% initiator solution (a) and the mixture was stirred for a further 5 minutes. Then the remaining monomer mixture and initiator solution (b) were charged continuously over a period of 4.5 hours. At this point, a further shot of 3.4 ml of the initiator solution (a) was added. The reaction was continued for a further hour. At the end of the process, the product was cooled to room temperature and collected.

The product was dried at 80°C. The dried polymer was found to be self-extinguishing after exposure to a naked flame.

The reaction product was also mixed with back-coating and mattress-ticking formulations e.g. Vinamul 3297, Vinamul 3479, UROCRYL 6002 and UROCRYL 300/86 A and found to be homogenous and stable over a wide range of compositions. Several films in various proportions were formed and dried in an oven at 80°C. The dried films were subjected to naked flame. It was found that the reaction product renders the back-coating and mattress-ticking formulations flame retardant over a wide range of compositions.

### Example 2

A flame retardant polymer was prepared according to the method of Example 1, using the following reagents and quantities:

| | |
|---|---|
| Initial Charge | 740 ml demineralised water |
| | 22.2 g anionic emulsifier A501 |
| | |
| Initiator solution (a) | 4.4% ammonium persulphate |
| Initiator solution (b) | 2% ammonium persulphate |
| | |
| Monomer mixture | 85 g 2-(methacryloyloxy)ethyl phosphate |
| | 85 g bis[2-(methacryloyloxy)ethyl] phosphate |
| | 5 g methyl methacrylate |
| | 5 g butyl acrylate |
| | 1 g methacrylic acid |

The dried polymer was found to be self-extinguishing after exposure to a naked flame.

### Example 3

A flame retardant polymer was prepared according to the method of Example 1, using the following reagents and quantities:

| | |
|---|---|
| Initial Charge | 750 ml demineralised water |
| | 22.2 g anionic emulsifier A501 |
| | |
| Initiator solution (a) | 4.4% ammonium persulphate |
| Initiator solution (b) | 2% ammonium persulphate |
| | |
| Monomer mixture | 85 g 2-(methacryloyloxy)ethyl phosphate |
| | 85 g bis[2-(methacryloyloxy)ethyl] phosphate |
| | 25 g butyl acrylate |

The dried polymer was again found to be self-extinguishing after exposure to a naked flame.

### Example 4

A flame retardant polymer was prepared according to the method of Example 1, using the following reagents and quantities:

| | |
|---|---|
| Initial Charge | 750 ml demineralised water |
| | 22.2 g anionic emulsifier A501 |
| | |
| Initiator solution (a) | 4.4% ammonium persulphate |
| Initiator solution (b) | 2% ammonium persulphate |
| | |
| Monomer mixture | 75 g 2-(methacryloyloxy)ethyl phosphate |
| | 75 g bis[2-(methacryloyloxy)ethyl] phosphate |
| | 50 g butyl acrylate |
| | 5 g methacrylic acid |

The dried polymer was once more found to be self-extinguishing after exposure to a naked flame.

### Example 5

A flame retardant polymer was prepared according to the method of Example 1, using the following reagents and quantities:

| | |
|---|---|
| Initial Charge | 750 ml demineralised water |
| | 34.68 g anionic emulsifier Empimin SNP6 (Huntsman) |
| | |
| Initiator solution (a) | 4.4% ammonium persulphate |
| Initiator solution (b) | 2% ammonium persulphate |
| | |
| Monomer mixture | 75 g 2-(methacryloyloxy)ethyl phosphate |
| | 75 g bis[2-(methacryloyloxy)ethyl] phosphate |
| | 50 g butyl acrylate |
| | 5 g methacrylic acid |

Analysis of the dried polymer showed it to contain 7.1% (w/w) phosphorus, and the polymer was found to be self-extinguishing after exposure to a naked flame.

### Example 6

A flame retardant polymer was prepared according to the method of Example 1, using the following reagents and quantities:

| | |
|---|---|
| Initial Charge | 740 ml demineralised water |
| | 34.68 g anionic emulsifier Empimin SNP6 |
| | |
| Initiator solution (a) | 4.4% ammonium persulphate |
| Initiator solution (b) | 2% ammonium persulphate |
| | |
| Monomer mixture | 75 g 2-(methacryloyloxy)ethyl phosphate |
| | 75 g bis[2-(methacryloyloxy)ethyl] phosphate |
| | 50 g styrene |
| | 5 g methacrylic acid |

Again, the dried polymer was found to be self-extinguishing after exposure to a naked flame.

### Example 7

A flame retardant polymer was prepared according to the method of Example 1, using the following reagents and quantities:

| | |
|---|---|
| Initial Charge | 630 ml demineralised water |
| | 34.68 g anionic emulsifier Empimin SNP6 |
| | |
| Initiator solution (a) | 4.4% ammonium persulphate |
| Initiator solution (b) | 2% ammonium persulphate |
| | |
| Monomer mixture | 85 g 2-(methacryloyloxy)ethyl phosphate |
| | 85 g bis[2-(methacryloyloxy)ethyl] phosphate |
| | 5 g methyl methacrylate |
| | 5 g butyl acrylate |
| | 1 g methacrylic acid |

The dried polymer was once again found to be self-extinguishing after exposure to a naked flame.

### Example 8

A flame retardant polymer was prepared according to the general method of Example 1, using the following reagents and quantities, with the exception that the initial feed of monomer mixture (c) was 20 ml (rather than 15 ml):

| | |
|---|---|
| Initial Charge | 750 ml demineralised water |
| | 14.8 g anionic emulsifier Empimin OT75 (Huntsman) |
| | |
| Initiator solution (a) | 4.4% ammonium persulphate |
| Initiator solution (b) | 2% ammonium persulphate |
| Monomer mixture | 75 g 2-(methacryloyloxy)ethyl phosphate |
| | 75 g bis[2-(methacryloyloxy)ethyl] phosphate |
| | 50 g 2-ethyl hexyl acrylate |
| | 5 g methacrylic acid |

As before, the dried polymer was found to be self-extinguishing after exposure to naked flame.

### Example 9

A flame retardant polymer was prepared according to the general method of Example 1, using the following reagents and quantities; however, some changes to the procedure were adopted, as noted below:

| | |
|---|---|
| Initial Charge | 450 ml demineralised water |
| | 17.3 g anionic emulsifier Empimin SNP6 |

This mixture was purged with nitrogen at 72°C prior to addition of further reactants.

| | |
|---|---|
| Initiator solution (a) | 4.28% ammonium persulphate |
| Initiator solution (b) | 2% ammonium persulphate |
| | |
| Monomer mixture | 40 g 2-(methacryloyloxy)ethyl phosphate |
| | 30 g bis[2-(methacryloyloxy)ethyl] phosphate |
| | 25 g acrylonitrile |

An initial feed of 10 ml of monomer mixture (c) was added to the reactor as a single charge and stirred for 5 minutes, followed by a single charge of 3.5 ml of the 4.4% initiator solution (a) and the mixture was stirred for a further 5 minutes. Then the remaining monomer mixture and initiator solution (b) were charged continuously over a period of 3 hours. The reaction thereafter was carried out in accordance with Example 1, and the dried polymer was found to be self-extinguishing after exposure to naked flame.

### Example 10

A flame retardant polymer was prepared according to the general method of Example 1, using the following reagents and quantities, with the exception that the initial feed of monomer mixture (c) was 20 ml (rather than 15 ml) and stirring was carried out at 620 RPM:

| | |
|---|---|
| Initial Charge | 750 ml demineralised water |
| | 20 g sodium lauryl sulphate (Aldrich) |
| | |
| Initiator solution (a) | 4.4% ammonium persulphate |
| Initiator solution (b) | 2% ammonium persulphate |
| | |
| Monomer mixture | 150 g ALBRITECT™ 6835* (Rhodia) |
| | 51 g 2-ethyl hexyl acrylate |
| | 5.2 g methacrylic acid |

| | |
|---|---|
| *ALBRITECT™ 6835 is a commercially available alkyl methacrylate phosphate ester. | |

The dried polymer was again found to be self-extinguishing after exposure to naked flame.

### Example 11

A flame retardant polymer was prepared according to the general method of Example 1, using the following reagents and quantities, with the exception that stirring was carried out at 625 RPM:

| | |
|---|---|
| Initial Charge | 740 ml demineralised water |
| | 34.5 g anionic emulsifier Empimin SNP6 |
| | |
| Initiator solution (a) | 4.4% ammonium persulphate |
| Initiator solution (b) | 2% ammonium persulphate |
| | |
| Monomer mixture | 150 g ALBRITECT™ 6835 |
| | 50 g styrene |
| | 5 g methacrylic acid |

As before, the dried polymer was found to be self-extinguishing after exposure to naked flame.

### Example 12

A flame retardant polymer was prepared according to the method of Example 1, using the following reagents and quantities, with the exception that stirring was carried out at 635 RPM:

| | |
|---|---|
| Initial Charge | 750 ml demineralised water |
| | 35 g anionic emulsifier Empimin SNP6 |
| | |
| Initiator solution (a) | 4.4% ammonium persulphate |
| Initiator solution (b) | 2% ammonium persulphate |
| | |
| Monomer mixture | 75 g 2-(methacryloyloxy)ethyl phosphate |
| | 75 g bis[2-(methacryloyloxy)ethyl] phosphate |
| | 50 g butyl acrylate |
| | 5 g methacrylic acid |

Again, the polymer was found to be self-extinguishing after exposure to a naked flame.

### Example 13

A flame retardant polymer was prepared according to the general method of Example 1, using the following reagents and quantities, with the exception that the initial feed of monomer mixture (c) was 20 ml (rather than 15 ml) and stirring was carried out at 630 RPM:

| | |
|---|---|
| Initial Charge | 750 ml demineralised water |
| | 34.3 g anionic emulsifier Empimin SNP6 |
| | |
| Initiator solution (a) | 4.4% ammonium persulphate |
| Initiator solution (b) | 2% ammonium persulphate |
| | |
| Monomer mixture | 151 g ALBRITECT™ 6835 |
| | 51 g styrene |
| | 5.1 g methacrylic acid |

Once more, the dried polymer was found to be self-extinguishing after exposure to naked flame.

### Example 14

A flame retardant polymer was prepared according to the general method of Example 1, using the following reagents and quantities, with the exception that the initial feed of monomer mixture (c) was 20 ml (rather than 15 ml) and stirring was carried out at 630 RPM:

| | |
|---|---|
| Initial Charge | 750 ml demineralised water |
| | 34.3 g anionic emulsifier Empimin SNP6 |
| | |
| Initiator solution (a) | 4.4% ammonium persulphate |
| Initiator solution (b) | 2% ammonium persulphate |
| | |
| Monomer mixture | 155 g ALBRITECT™ 6835 |
| | 52 g 2-ethyl hexyl acrylate |
| | 5.1 g methacrylic acid |

As in previous examples, the dried polymer was found to be self-extinguishing after exposure to naked flame.

### Example 15

A flame retardant polymer was prepared according to the general method of Example 1, using the following reagents and quantities, with the exception that the initial feed of monomer mixture (c) was 20 ml (rather than 15 ml) and stirring was carried out at 630 RPM:

| | |
|---|---|
| Initial Charge | 750 ml demineralised water |
| | 35 g anionic emulsifier Empimin PCA130 (Huntsman) |
| | |
| Initiator solution (a) | 4.4% ammonium persulphate |
| Initiator solution (b) | 2% ammonium persulphate |
| | |
| Monomer mixture | 155 g ALBRITECT™ 6835 |
| | 52 g 2-ethyl hexyl acrylate |
| | 5.1 g methacrylic acid |

The dried polymer was again found to be self-extinguishing after exposure to naked flame.

### Example 16

A flame retardant polymer was prepared according to the general method of Example 1, using the following reagents and quantities, with the exception that stirring was carried out at 636 RPM:

| | |
|---|---|
| Initial Charge | 580 ml demineralised water |
| | 35 g Empimin PCA130 |
| | |
| Initiator solution (a) | 4.4% ammonium persulphate |
| Initiator solution (b) | 1.02% ammonium persulphate |
| | |
| Monomer mixture | 200 g ALBRITECT™ 6835 |
| | 90 g methyl methacrylate |
| | 70 g butyl acrylate |
| | 5 g methacrylic acid |

Once again, the dried polymer was found to be self-extinguishing after exposure to naked flame.

### Example 17

A flame retardant polymer was prepared according to the method of Example 1, using the following reagents and quantities, with the exception that stirring was carried out at 630 RPM:

| | |
|---|---|
| Initial Charge | 750 ml demineralised water |
| | 40 g anionic emulsifier Empimin OT75 |
| | |
| Initiator solution (a) | 4.4% ammonium persulphate |
| Initiator solution (b) | 2% ammonium persulphate |
| | |
| Monomer mixture | 75 g 2-(methacryloyloxy)ethyl phosphate |
| | 75 g bis[2-(methacryloyloxy)ethyl] phosphate |
| | 50 g butyl acrylate |
| | 5 g methacrylic acid |

As before, the dried polymer was found to be self-extinguishing after exposure to naked flame.

### Example 18

A flame retardant polymer was prepared according to the general method of Example 1, using the following reagents and quantities, with the exception that the initial feed of monomer mixture (c) was 20 ml (rather than 15 ml):

| | |
|---|---|
| Initial Charge | 750 ml demineralised water |
| | 14.8 g anionic emulsifier Empimin OT75 |
| | |
| Initiator solution (a) | 4.4% ammonium persulphate |
| Initiator solution (b) | 2% ammonium persulphate |
| | |
| Monomer mixture | 88 g ALBRITECT™ 6835 |
| | 110 g 2-ethyl hexyl acrylate |
| | 5 g methacrylic acid |

The dried polymer was again found to be self-extinguishing after exposure to naked flame, and thermogravimetric analysis of the polymer showed that it retained 25% of its weight at 600°C.

### Example 19

A flame retardant polymer was prepared according to the method of Example 1, using the following reagents and quantities, with the exception that stirring was carried out at 630 RPM:

| | |
|---|---|
| Initial Charge | 740 ml demineralised water |
| | 35 g anionic emulsifier Empimin OT75 |
| | |
| Initiator solution (a) | 4.4% ammonium persulphate |
| Initiator solution (b) | 2% ammonium persulphate |
| Monomer mixture | 75 g 2-(methacryloyloxy)ethyl phosphate |
| | 75 g bis[2-(methacryloyloxy)ethyl] phosphate |
| | 50 g styrene |
| | 5 g methacrylic acid |

Again, the dried polymer was found to be self-extinguishing after exposure to a naked flame.

### Example 20

A flame retardant polymer was prepared according to the general method of Example 1, using the following reagents and quantities, with the exception that the initial feed of monomer mixture (c) was 20 ml (rather than 15 ml):

| | |
|---|---|
| Initial Charge | 750 ml demineralised water |
| | 14.8 g anionic emulsifier Empimin PCA130 |
| | |
| Initiator solution (a) | 4.4% ammonium persulphate |
| Initiator solution (b) | 2% ammonium persulphate |
| | |
| Monomer mixture | 88 g ALBRITECT™ 6835 |
| | 110 g 2-ethyl hexyl acrylate |
| | 5 g methacrylic acid |

The dried polymer was once more found to be self-extinguishing after exposure to naked flame.

### Example 21

A flame retardant polymer was prepared according to the general method of Example 1, using the following reagents and quantities, with the exception that the initial feed of monomer mixture (c) was 20 ml (rather than 15 ml) and stirring was carried out at 632 RPM:

| | |
|---|---|
| Initial Charge | 750 ml demineralised water |
| | 35 g anionic emulsifier Rhodafac RS610E (Rhodia) |
| Initiator solution (a) | 4.4% ammonium persulphate |
| Initiator solution (b) | 2% ammonium persulphate |
| | |
| Monomer mixture | 45 g ALBRITECT™ 6835 |
| | 151 g 2-ethyl hexyl acrylate |
| | 6 g methacrylic acid |

As in previous experiments, the dried polymer was found to be self-extinguishing after exposure to naked flame, and thermogravimetric analysis of the polymer showed that it retained 90% of its weight at 400°C.

## Claims

1. A flame retardant material which comprises a flame retardant polymer emulsion wherein said polymer emulsion is obtained by the polymerisation of at least one unsaturated monomer comprising at least one phosphorus atom.

2. A flame retardant material as claimed in claim 1 wherein said at least one unsaturated monomer comprising at least one phosphorus atom comprises a phosphonate or phosphate monomer.

3. A flame retardant material as claimed in claim 2 wherein said at least one unsaturated monomer comprising at least one phosphorus atom comprises a phosphate monomer.

4. A flame retardant material as claimed in claim 3 wherein said phosphate monomer comprises at least one (alk)acrylate group.

5. A flame retardant material as claimed in claim 4 wherein said at least one (alk)acrylate group comprises at least one acrylate or methacrylate group.

6. A flame retardant composition as claimed in any one of claims 1 to 5 wherein said at least one unsaturated monomer comprising at least one phosphorus atom comprises at least one (alk)acryloyoxylalkyl phosphate monomer.

7. A flame retardant material as claimed in claim 6 wherein said at least one (alk)acryloyoxylalkyl phosphate monomer comprises at least one mono- or bis[(alk)acryloyloxy(C₁₋₄alkyl)] phosphate monomer.

8. A flame retardant material as claimed in claim 7 wherein said at least one mono-or bis[(alk)acryloyloxy(C₁₋₄ alkyl)] phosphate monomer comprises at least one mono- or bis[(alk)acryloyloxy(m)ethyl] phosphate monomer.

9. A flame retardant material as claimed in claim 7 wherein said at least one mono-or bis[(alk)acryloyloxy(C₁₋₄ alkyl)] phosphate monomer comprises at least one monomer of formula (I):
[H₂C=CRCO₂(CH₂)ₘO]ₙP(O)(OH)₃₋ₙ (I)
wherein R = H or CH₃, m = 1-4 and n = 1 or 2.

10. A flame retardant composition as claimed in claim 8 wherein said at least one mono- or bis[(alk)acryloyloxy(m)ethyl] phosphate monomer comprises at least one mono- or bis[2-((meth)acryloyl)oxyethyl] phosphate monomer.

11. A flame retardant composition as claimed in any one of claims 1 to 10 wherein said at least one unsaturated monomer comprising at least one phosphorus atom comprises at least one of 2-(methacryloyl)oxyethyl phosphate (II) and bis[2-(methacryloyl)oxyethyl] phosphate (III).
H₂C=C(CH₃)CO₂CH₂CH₂OP(O)(OH)₂ (II)
[H₂C=C(CH₃)CO₂CH₂CH₂O]₂P(O)OH (III)

12. A flame retardant material as claimed in any one of claims 1 to 10 wherein said polymer emulsion is obtained by the polymerisation of at least one unsaturated monomer comprising at least one phosphorus atom with at least one co-monomer.

13. A flame retardant material as claimed in claim 12 wherein said at least one co-monomer comprises at least one unsaturated co-monomer comprising at least one carbon-carbon double bond.

14. A flame retardant material as claimed in claim 12 or 13 wherein said at least one co-monomer comprises at least one [alpha],[beta]-unsaturated carboxylic acid, anhydride, or the aliphatic alicyclic, aromatic and heteroaromatic (partial) ester or (partial) amide thereof, [alpha],[beta]-unsaturated nitrile, vinyl aromatic, vinyl ester of an aliphatic carboxylic acid, vinyl ether of an aliphatic, alicyclic, aromatic, or heteroaromatic alcohol, or diene.

15. A flame retardant material as claimed in any one of claims 12 to 14 wherein said at least one co-monomer comprises at least one of (meth)acrylic acid and alkyl (meth)acrylates.

16. A flame retardant material as claimed in any preceding clam wherein said polymer emulsion is obtained by the polymerisation of a composition comprising at least 0.0001% by weight of said at least one unsaturated monomer comprising at least one phosphorus atom.

17. A flame retardant material as claimed in claim 16 wherein said polymer emulsion is obtained by the polymerisation of at least one unsaturated monomer comprising at least one phosphorus atom with at least one co-monomer in the ratio of from 55:45 to 94:6 by weight.

18. A flame retardant material as claimed in claim 17 wherein said polymer emulsion is obtained by the polymerisation of at least one unsaturated monomer comprising at least one phosphorus atom with at least one co-monomer in the ratio of from 75:25 to 87.5:12.5 by weight.

19. A flame retardant material as claimed in any preceding claim which comprises more than one unsaturated monomer comprising at least one phosphorus atom comprises more than one such monomer.

20. A flame retardant material as claimed in claim 19 which comprises two unsaturated monomers comprising at least one phosphorus atom.

21. A flame retardant material as claimed in claim 20 wherein said unsaturated monomers comprising at least one phosphorus atom are present in an amount of from 0.0001-99.9999% of a first monomer and 99.9999-0.0001 % of a second monomer.

22. A flame retardant material as claimed in any one of claims 19 to 21 wherein said monomers include the same levels of unsaturation.

23. A flame retardant material as claimed in any one of claims 19 to 21 wherein said monomers comprise different levels of unsaturation.

24. A flame retardant material as claimed in claim 23 wherein said polymer emulsion comprises two unsaturated monomers comprising at least one phosphorus atom, wherein the first of said monomers comprises a single unsaturated bond and the second of said monomers comprises multiple unsaturated bonds.

25. A flame retardant material as claimed in claim 24 wherein said second monomer comprises two unsaturated bonds.

26. A flame retardant formulation comprising a flame retardant material as claimed in any one of claims 1 to 25.

27. A flame retardant formulation as claimed in claim 26 which additionally comprises at least one additive.

28. A flame retardant formulation as claimed in claim 27 wherein said at least one additive comprises at least one polymeric additive.

29. A flame retardant formulation as claimed in claim 28 wherein said at least one polymeric additive comprises at least one acrylate or vinyl polymer or copolymer.

30. An intumescent coating, a back coating layer for fabric, a flame retardant wooden material, a textile fibre or a polymer casting obtained from a flame retardant formulation as claimed in any one of claims 26 to 29.

31. A flame retardant formulation for use in the preparation of a back coating for fabrics or in the treatment of wood, said formulation comprising (1) a flame retardant material comprising a copolymer of phosphorus containing monomers (II) and (III) with methacrylic acid, methyl methacrylate and butyl acrylate and (2) a copolymer of vinyl acetate, vinyl chloride and ethylene.

32. The preparation of a flame retardant material as claimed in any one of claims 1 to 25 or a flame retardant formulation as claimed in any one of claims 26 to 29 or 31.

33. The preparation of an intumescent coating, a back coating layer for fabric, a flame retardant wooden material, a textile fibre, or a polymer casting from either a flame retardant material as claimed in any one of claims 1 to 25, or a flame retardant formulation as claimed in any one of claims 26 to 29 or 31.

34. The use of a flame retardant material as claimed in any one of claims 1 to 25 in the preparation of a flame retardant formulation as claimed in any one of claims 26 to 29 or 31, an intumescent coating, a back coating layer for fabric, a flam retardant wooden material, a textile fibre, or a polymer casting.
